# EUROPEAN PATENT SPECIFICATION

(11) **EP 1 773 129 B1**
(45) Date of publication and mention of the grant of the patent: **09.01.2008**
(21) Application number: 05769177.6
(22) Date of filing: 22.07.2005
(51) Int. Cl.: A21D 8/04, A21D 10/00, A21D 13/00

(54) **USE OF AMINOPEPTIDASE IN DOUGH AS A BREAD IMPROVER**
VERWENDUNG VON AMINOPEPTIDASE IN TEIG ALS BACKMITTEL& x9;
UTILISATION D'AMINOPEPTIDASE DANS LES PÂTES COMME AMÉLIORANT DE PANIFICATION

(30) Priority: 23.07.2004 EP 04077129
(43) Date of publication of application: 18.04.2007
(73) Proprietor: CSM Nederland B.V., 1112 XE Diemen (NL)
(72) Inventor: SCHARF, Udo, 55413 Weiler (DE); STOLZ, Peter, 32427 Minden (DE); HUSCROFT, Simon, Christopher, NL-2252 TB Voorschoten (NL); SCHMIDT-HAHN, Kerstin, CSM Nederland B.V., NL-1112 XE Diemen (NL)
(74) Representative: Swinkels, Bart Willem
(86) International application number: PCT/NL2005/000534
(87) International publication number: WO 2006/009447

(56) References cited:
- US-A- 5 914 259
- US-A- 5 994 113
- US-A1- 2003 190 399
- US-A1- 2004 028 782
- CHIEN H-C R ET AL: "Purification, characterization, and genetic analysis of a leucine aminopeptidase from Aspergillus sojae" 7 June 2002 (2002-06-07), BIOCHIMICA ET BIOPHYSICA ACTA . GENE STRUCTURE AND EXPRESSION, ELSEVIER, AMSTERDAM, NL, PAGE(S) 119-126 , XP004356754 ISSN: 0167-4781 page 120, column 1, paragraph 1

## Description

### TECHNICAL FIELD OF THE INVENTION

The present invention is concerned with the application of enzymes in dough. More particularly, the present invention relates to the use of enzymes in dough to improve crumb softness of the baked products.

### BACKGROUND OF THE INVENTION

Warm, freshly baked bread just out of the oven has a very appealing appearance, taste, smell and texture. Most consumers prefer bread with typical freshly baked characteristics such as a soft interior crumb texture and a crisp outer crust. Furthermore, in many countries bread products with an open crumb structure are popular with consumers. Bakers and bakeries face the challenge of providing bread products that exhibit these favourable properties whilst at the same time ensuring that these properties are retained for at least a few days. Furthermore, bakers and particularly industrial bakeries have to produce such bread products with the help of highly automated machinery and at a high throughput.

Most commercially prepared bread is sold fresh, i.e. fully baked and at room temperature, and such bread is typically locally baked so that distribution from the bakery to the consumer can be completed within the first day or two to provide maximum freshness. Bread, however, begins to stale immediately after baking due primarily to starch retrogradation and rapidly loses its initial appeal. The term "staling" is used to describe time dependent undesirable changes in the properties of bread such as an increase of the firmness of the crumb, a decrease of the elasticity of the crumb, as well as changes in the crust which becomes tough and leathery.

While the problems of maintaining the freshness of all breads are difficult, crisp or hard crust bread types such as French style bread have even shorter shelf lives. With hard crust breads, the breads deteriorate due not only to starch retrogradation, but also to the loss of the crust's crispy texture due to moisture migration. Thus, crisp crust breads such as French breads are ideally consumed the same day as baked.

The enzyme alpha-amylases is widely used in bread to improve crumb softness and to retard staling. Alpha-amylase partially degrades the starch fraction in dough and increase crumb softness.

It is also known in the bakery art to apply enzymes, such as hemicellulase, in bread dough to increase loaf volume. Hemicellulases break down the hemicellulose fraction of wheat flour, thus releasing water normally bound to this fraction into the dough. The use of hemicellulases in dough results in an improved oven spring of the dough during baking and improved loaf volume of the baked product.

Furthermore, it has been suggested to apply enzymes in dough to improve dough machinability, especially of high gluten dough. It is well-known that gluten is needed in dough to obtain a desired specific volume and stability of the dough. To this end, it is preferred to prepare dough from a flour which is rich in gluten. However, a dough rich in gluten will usually be relatively tough and inflexible, and is difficult to process in machine baking of loaves of bread or other dough products. It has been reported that the machinability, e.g. extensibility, of such doughs can be improved significantly by adding protease to the dough.

US 5,914,259 is concerned with aminopeptidases from *Aspergilli niger.* These aminopeptidases are said to have several commercial applications, including the preparation of baked products such as bread. It is stated that the application of these aminopeptidases in 1 to 100 units phenylalanine-aminopeptidase per kg of dough results in an improved flavour and aroma of the baked product.

US 5,994,113 relates to an enzyme exhibiting aminopeptidase activity and the use thereof for various industrial purposes. This particular aminopeptidase originates from *Aspergillus oryzae.* It is observed in the patent that the enzyme may be used advantageously for improving the flavour, crust colour, crumb structure and dough stickiness of baked products. In column 12, lines 21-45 it is said that the enzyme can be used to weaken the gluten components of flour so as to obtain a softening of so-called hard flour. According to the inventors, the aminopeptidase does not degrade the network of the gluten and they conclude that consequently the dough characteristics and crumb structure are not affected.

### SUMMARY OF THE INVENTION

The inventors have unexpectedly discovered that aminopeptidase may be applied advantageously in dough before baking so as to increase and preserve crumb softness of the baked dough product. Provided the aminopeptidase is added prior to baking, the enzyme's activity will bring about changes in the dough that will favour the formation of a very soft crumb. After baking, crumb softness will be retained for a relatively long period of time. As a result, the occurrence of negative attributes associated with staling is effectively delayed. Although the inventors do not wish to be bound by theory, it is believed that when used in accordance with the present invention aminopeptidase will hydrolyse peptide bonds in the dough gluten, thereby changing the properties of the gluten in a way that results in improved dough machinability and in a baked product with increase crumb softness, increased specific volume and enhanced resistance to staling.

### DETAILED DESCRIPTION OF THE INVENTION

Accordingly, one aspect of the invention relates to the use of an aminopeptidase to increase and preserve crumb softness of a baked dough product, said use comprising incorporating an aminopeptidase into the dough prior to baking.

The term "dough" as used herein includes various types of dough, including dough for bread, doughnuts, pies, pizzas, doughnuts and rice cakes. Dough is typically prepared by combining a farinaceous powder, such as wheat flour, as the main component with water and other optional materials such as oils and fats, sugars, dairy products, eggs, yeast nutrients, enzymes, emulsifying agents, in the presence or absence of yeast cultures, followed by kneading.

The term "bread" as used herein refers to products obtained by steaming, baking or frying the above defined various types of dough.

In accordance with the present invention the aminopeptidase is suitably incorporated into the dough in a concentration of at least 2 mg per kg of flour. Preferably the aminopeptidase is incorporated in a concentration of at least 5 mg per kg of flour. Typically, the amount of enzyme applied into the dough will not exceed 300 mg per kg, preferably it will not exceed 100 mg per kg of flour. It should be understood that the aforementioned enzyme concentrations refer to the enzyme as such and not to other components that are typically contained in enzyme preparations, e.g. fillers.

In order to allow the aminopeptidase to generate a significant beneficial effect it is not only important to employ an adequate dosage, but also to control time and temperature in such a way that the enzyme will be allowed to exert its effect on the dough. The activity of the enzyme is temperature dependent and will usually have its maximum between 40 and 70 °C. Consequently, the dough preparation advantageously includes a proofing step at elevated temperature (e.g. at least 32 °C).

In case dough preparation does not include a proofing step, it may be advisable to employ a relatively high dosage of aminopeptidase or to allow the dough to rest for some time prior to baking. Yet another possibility is to employ an oven temperature program that will cause relatively late inactivitation of the enzyme.

The benefits of the present invention may be realised with a variety of aminopeptidases. Best results, however, have been obtained with leucine aminopeptidases. Typically, in accordance with the present invention the aminopeptidase employed exhibits a leucine aminopeptidase activity of at least 5 (leucine aminopeptidase) LAP units per g, preferably of at least 10 LAP units per g and most preferably of at least 30 LAP units per g. One LAP unit is the amount of enzyme that hydrolyses leucine-p-nitroanilide to produce 1 µmole of p-nitroanilin per minute at a pH of 7.5 and a temperature of 30°C.

In accordance with the present invention the aminopeptidase is advantageously applied in the dough in an amount corresponding with an added aminopeptidase activity of at least 5 LAP units per kg of flour, more preferably of at least 10 LAP units per kg of flour and most preferably of at least 15 LAP units per kg of flour. Typically, the amount of aminopeptidase applied will not exceed the equivalent of 2000 LAP units per kg of flour, more preferably it will not exceed the equivalent of 1000 LAP units per kg of flour.

In a particularly preferred embodiment the present invention employs an aminopeptidase derived from a non-genetically modified *Aspergillus oryza* or *Rhizopus oryzae* strain or from a transformed host organism carrying a DNA sequence which codes for anaminopeptidase, said DNA sequence being derived from an *Aspergillus oryza* or *Rhizopus oryzae* strain. According to an even more preferred embodiment the aminopeptidase is derived from a non-genetically modified *Rhizopus* or *Aspergillus* strain. Most preferably, the aminopeptidase is derived from a non-genetically modified strain of *Rhizopus oryzae.*

Examples of commercial enzyme preparations that contain a non-genetically modified aminopeptidase originating from *Rhizopus oryzae* include Peptidase 433P^{™}, Peptidase R^{™} and Promod 433P^{™}. Examples of commercial enzyme preparations that contain an aminopeptidase originating from *Aspergillus oryza* or originating from a transformed host organism carrying a DNA sequence derived from an *Aspergillus oryza* strain which DNA sequence codes for an aminopeptidase include: Corolase LAP^{™}, Bioprotease FV^{™} and Debitrase DBP 20^{™}.

According to a particularly preferred embodiment of the invention the present use of aminopeptidase includes incorporating into the dough the aminopeptidase of a commercial aminopeptidase preparation selected from the group consisting of Corolase LAP^{™}, Peptidase 433P^{™}, Peptidase R^{™}, Promod 446P^{™}, Flavourzyme 500MG^{™}, Bioprotease FV^{™} and Debitrase DBP 20^{™}, more preferably the aminopeptidase of a commercial aminopeptidase preparation selected from the group consisting of Peptidase 433P^{™}, Peptidase R^{™}, Promod 446P^{™} and Flavourzyme 500MG^{™}. It is noted that several of the aminopeptidases contained in the aforementioned commercial products are marketed in different formulations and under different product names. It should be understood that the present invention encompasses the use of aminopeptidases that constitute the main active aminopeptidase component of the aforementioned commercial products irrespective of the form in which and/or brand name under which these aminopeptidases are available. The aminopeptidase contained in Corolase LAP^{™} is described in US 6,228,623. The aminopeptidase contained in Corolase LAP^{™} is suitably defined as in claim 15 of US 6,228,623.

In a particularly preferred embodiment of the present invention the aminopeptidase employed is the aminopeptidase contained in Peptidase 433P^{™}, Peptidase R^{™} or in Promod 446P^{™}. Most preferably, the present use involves incorporating into the dough the aminopeptidase contained in Promod 446P^{™}.

In accordance with the present invention the aminopeptidase contained in Corolase LAP^{™} is advantageously incorporated into the dough in a concentration equivalent to 40-5000 mg Corolase LAP^{™} per kg of flour, more preferably equivalent to 100-2000 mg Corolase LAP^{™} per kg of flour. The aminopeptidase contained in Peptidase 433P^{™} is preferably incorporated into the dough in a concentration equivalent to 20-2500 mg Peptidase 433^{™} per kg of flour, more preferably to 50-1000 mg Peptidase 433^{™} per kg of flour. The aminopeptidase contained in Peptidase R^{™} is preferably incorporated into the dough in a concentration equivalent to 4-800 mg Peptidase R^{™} per kg of flour, more preferably to 10-300 mg Peptidase R^{™} per kg of flour. The aminopeptidase of Bioprotease FV^{™} is advantageously incorporated in a concentration equivalent to 10-1200 mg Bioprotease FV^{™} per kg of flour, more preferably to 40-800 mg Bioprotease FV^{™} per kg of flour. The aminopeptidase contained in Promod 446P^{™} is suitably incorporated into the dough in a concentration equivalent to 4-800 mg Promod 446P^{™} per kg of flour, more preferably to 10-300 mg Promod 446P^{™} per kg of flour. The aminopeptidase contained in Flavourzyme 500MG^{™} is preferably incorporated into the dough in a concentration equivalent to 10-1200 mg Flavourzyme 500MG^{™} per kg of flour, more preferably to 40-800 mg Flavourzyme 500MG^{™} per kg of flour. The aminopeptidase contained in Debitrase DPB 20^{™} is preferably incorporated in a concentration equivalent to 10-1200 mg Debitrase DPB 20^{™} per kg of flour, more preferably in a concentration equivalent to 40-800 mg Debitrase DPB 20^{™} per kg of flour. Here the terminology "a concentration equivalent to x mg/kg of Product Y" refers to the concentration in which aminopeptidase is effectively added when Product Y is incorporated into a dough in a concentration of x mg/kg.

As regards the use of aminopeptidase to increase and preserve crumb softness of baked dough products it is preferred to incorporate into the dough the aminopeptidase of a commercial aminopeptidase preparation selected from the group consisting of Corolase LAP^{™}, Peptidase 433P^{™}, Peptidase R^{™}, Bioprotease FV^{™}, Promod 446P^{™}, Flavourzyme 500MG^{™} and Debitrase DBP 20^{™} ; even more preferably from the group consisting of Bioprotease FV^{™}, Corolase LAP^{™}, Peptidase 433P^{™}, Peptidase R^{™} and Flavourzyme 500MG^{™}. These aminopeptidases were found to have a pronounced positive impact on crumb softness and the resistance of the crumb against staling.

The combined use of aminopeptidase and ascorbic acid was found to have an unexpected beneficial impact on particularly crumb softness and staling, resulting from a synergistic interaction of these two components. Thus, a preferred embodiment of the invention relates to the combined use of aminopeptidase and ascorbic acid. Typically, the aminopeptidase is added to the dough prior to baking in an amount of at least 5 mg per kg of flour. Preferably, ascorbic acid is employed in an amount of at least 10 mg per kg of flour. Generally, the amount of ascorbic acid used in accordance with the present invention will not exceed 500 mg per kg of flour.

The inventors have found that the aminopeptidase, especially the aminopeptidase of Corolase LAP^{™}, may suitably be used in dough as an amylase replacer. Hence, in a preferred embodiment, the use according to the present invention involves the addition of the aminopeptidase of Corolase LAP^{™} to the dough, but does not include the incorporation of amylase, particularly alpha-amylase, into the dough.

Another aspect of the present invention relates to a bread improver composition containing at least 100 mg/kg of an aminopeptidase derived from a non-genetically modified *Rhizopus oryzae* strain or from a transformed host organism carrying a DNA sequence which codes for an aminopeptidase, said DNA sequence being derived from a *Rhizopus oryzae* strain. The inventors have observed that enzyme preparations containing adequate amounts of the aforementioned aminopeptidase produce very favourable results in terms of crumb softness, dough extensibility and specific volume. Examples of commercial enzyme preparations that contain a non-genetically modified aminopeptidase originating from *Rhizopus oryzae* include Peptidase 433P^{™}, Peptidase R^{™} and Promod 433P^{™}. Most preferably, the aminopeptidase incorporated in the present bread improver composition is derived from a non-genetically modified *Rhizopus oryzae* strain.

According to another preferred embodiment, the bread improver composition contains a commercial aminpeptidase preparation selected from the group consisting of Peptidase 433P^{™}, Peptidase R^{™} and Promod 446P^{™}. Preferably, the bread improver composition contains at least 500 mg/kg, more preferably at least 1000 mg/kg of said aminopeptidase. Typically the amount of aminopeptidase contained within the bread improver composition will not exceed 100 g/kg, preferably it will not exceed 30 g/kg.

In a particularly advantageous embodiment of the invention, the bread improver composition additionally contains at least 100 mg/kg ascorbic acid. Preferably the ascorbic acid is present in the bread improver composition in an amount of at least 300 mg/kg, Typically, the amount of ascorbic acid does not exceed 10 g/kg.

The present bread improver composition may suitably contain any bakery ingredients that are commonly applied in bread improver compositions. In particular, the composition may advantageously contain at least 0.1 wt.% of a bakery ingredient selected from the group consisting of emulsifiers, yeast, baking powder, flour, fat, redox agents, acids and enzyme preparations containing α-amylase and/or hemicellulase activity, especially ingredients selected from the group consisting of emulsifiers, yeast, baking powder, flour, fat and enzyme preparations containing α-amylase and/or hemicellulase activity.

Yet another aspect of the invention is concerned with a dough containing at least 5 mg per kg of flour of an aminopeptidase derived from a non-genetically modified *Rhizopus oryzae* strain or from a transformed host organism carrying a DNA sequence which codes for an aminopeptidase, said DNA sequence being derived from a *Rhizopus oryzae* strain. Most preferably, the aminopeptidase incorporated in the present bread improver composition is derived from a non-genetically modified *Rhizopus oryzae* strain.

In another preferred embodiment, the dough contains a commercial aminopeptidase preparation selected from the group consisting of Peptidase 433P^{™}, Peptidase R^{™} and Promod 446P^{™}. Most preferably, the dough contains at least 5 mg of the aminopeptidase contained in Promod 446P^{™}.

Finally, a further aspect of the invention concerns a baked product, especially a partially or fully baked bread, obtained (or obtainable) by baking a dough as described herein before.

The invention is further illustrated by means of the following examples.

### EXAMPLES

### Example 1

White tin bread was prepared on the basis of the following recipe:

| Dough ingredient | Parts per weight | | | |
|---|---|---|---|---|
| Wheat flour | 3000 | | | |
| Water | 1800 | | | |
| Yeast | 120 | | | |
| Salt | 60 | | | |
| Ascorbic acid | 0.3 | | | |
| Aminopeptidase (Peptidase 433P^{™})^{#} | 0 | 0.3 | 1.0 | 3.0 |

| | | | | |
|---|---|---|---|---|
| ^{#}Activity 250 LAP units/g | | | | |

The dough ingredients were admixed in Diosna^{™} Spiral mixer and kneaded for 2 + 5 minutes. The dough was allowed to rest for 5 minutes before it was divided in pieces of about 600 grams which were put into tins. Next the dough pieces were proofed at 33 °C and a relative humidity of 80% for 75 minutes. After proofing the tins were transferred into a preheated oven and baked for 35 minutes with a starting temperature of 240 °C that decreased to 210 °C during the baking cycle.

After proofing the dough was evaluated by a number of experienced bakers. The same bakers also evaluated the bread shortly after it had been taken from the oven. It was found that the doughs prepared with Peptidase 433P^{™} were softer and more extensible than the dough that did not contain added aminopeptidase (control). Furthermore, the baked breads containing added aminopeptidase were found to have a softer crumb than the control. The breads containing 0.3 and 1.0 part per weight of Peptidase 433P^{™} had specific volumes that were respectively 12% and 15% higher than that of the control. The product containing 3.0 parts per weight of the aminopeptidase preparation had a slightly lower specific volume than the control. The bakers agreed that best results were obtained with the products containing 0.3 and 1.0 parts per weight of Peptidase 433P^{™}.

### Example 2

Example 1 was repeated except that this time aminopeptidase was incorporated into the dough in the form of Promod 446P^{™} (Activity 900 LAP units/g). The dosages employed were 0.03, 0.1 and 0.3 parts per weight.

It was found that the doughs prepared with Promod 446P^{™} were more extensible and supple than the dough that did not contain added aminopeptidase (control). Furthermore, the baked breads containing 0.1 and 0.3 parts per weight of added aminopeptidase were found to have a specific volume that was 9% higher than that of the control and that of the product containing 0.03 wt.% added aminopeptidase. The bakers agreed that best results were obtained with the products containing 0.1 and 0.3 parts per weight of Promod 446P^{™}.

### Example 3

Example 2 was repeated with the exception that no ascorbic acid was added to the dough. The results obtained were similar to those presented in example 2 except that the dough containing no added ascorbic acid was found to be less extensible than the same dough containing added ascorbic acid. Furthermore, it was observed that the volume and elasticity of the breads in this experiment was lower than that of breads additionally containing added ascorbic acid.

### Example 4

Example 2 was repeated with the exception that additionally 0.06 parts per weight amylase (Fermizym^{™} ex DSM) was added to the dough. The breads containing the combination of Promod 446P™ and amylase were found to stale at a substantially slower rate than identical breads containing only added Promod 446P^{™} or only added amylase.

### Example 5

A white tin bread was prepared as described in Example 1, applying as the aminopeptidase 0.1 parts of PROMOD 446P^{™}. In addition, 0.12 parts of a hemicellulase (Veron Spezial^{™} ex AB Enzymes) were incorporated into the dough. The addition of the hemicellulase was found to produce a more supple dough and resulted in bigger loaf volumes and softer crumb properties.

### Example 6

Example 1 was repeated except that this time aminopeptidase was incorporated into the dough in the form of Corolase LAP^{™} (Activity 350 LAP units/g). The dosages employed were 0.06, 0.6 and 3 parts per weight.

It was found that the doughs prepared with Corolase LAP^{™} were softer and more extensible than the dough that did not contain added aminopeptidase (control). The baked breads containing added aminopeptidase were found to have a softer crumb than the control. Furthermore, it was found that the breads containing 0.6 and 3 parts per weight of added Corolase LAP^{™} were staling at a much slower rate than the control product.

The baked breads containing added aminopeptidase were found to have a significantly higher specific volume than the control. To be more precise the specific volumes of the breads containing 0.06, 0.6 and 3 parts per weight of aminopeptidase were respectively 4%, 19% and 22% higher than the control. The bakers agreed that best results were obtained with the products containing 0.6 and 3 parts per weight of Corolase LAP^{™}.

### Example 7

Example 6 was repeated with the exception that no ascorbic acid was added to the dough. The results obtained were similar to those presented in example 3 except that the crumb of the breads was found to be less soft. Furthermore, the breads in this experiment were found to stale more rapidly than the breads obtained from an identical dough composition containing added ascorbic acid. From the results obtained in experiments 6 and 7 it can be concluded that the anti-staling effect of Corolase LAP^{™} and ascorbic acid clearly exceeds the effect that could have been anticipated based on the effects observed for ascorbic acid and Corolase LAP^{™} alone

### Example 8

A white tin bread was prepared as described in Example 1, applying as the aminopeptidase 3 parts of Corolase LAP^{™}. In addition 0.36 parts of a hemicellulase (Veron Spezial^{™} ex AB Enzymes) were incorporated into the dough. The doughs made with these 3 ingredients were more extensible than doughs containing only the peptidase and ascorbic acid. Furthermore, the breads obtained had a higher volume and more crumb softness than breads that did not contain the hemicellulase. Also in terms of freshkeeping, the breads containing the 3 aforementioned ingredients performed better than breads containing only added aminopeptidase and ascorbic acid.

### Example 9

Example 1 was repeated except that this time aminopeptidase was incorporated into the dough in the form of Bioprotease FV^{™} (Activity 1000 LAP units/g). The dosages employed were 0.3, 0.5 and 0.7 parts per weight.

It was found that the breads prepared with Bioprotease^{™} had a softer crumb than the control. Furthermore, it was found that the breads containing 0.3 and 0.5 parts per weight of added Bioprotease FV^{™} were staling at a much slower rate than the control product.

The baked breads containing added aminopeptidase were found to have a significantly higher specific volume than the control. To be more precise the specific volumes of the breads containing 0.3, 0.5 and 0.7 parts per weight of aminopeptidase were respectively 6%, 13% and 12% higher than the control.

### Example 10

Example 1 was repeated except that this time aminopeptidase was incorporated into the dough in the form of Peptidase R^{™}. Furthermore, the ascorbic acid concentration was reduced to 0.15 parts per weight. The dosages of Peptidase R^{™} employed were 0.09, 0.15 and 0.24 parts per weight.

It was found that the doughs prepared with Peptidase R^{™} were softer and more extensible than the dough that did not contain added aminopeptidase (control). The baked breads containing added aminopeptidase were found to have a softer crumb than the control. Furthermore, it was found that the breads containing Peptidase R^{™} were staling at a much slower rate than the control product.

The baked breads containing added Peptidase R^{™} were found to have a significantly higher specific volume than the control. To be more precise the specific volumes of the breads containing 0.09, 0.15 and 0.24 parts per weight of aminopeptidase were respectively 8%, 18% and 21% higher than the control.

### Example 11

Example 10 was repeated with the exception that no ascorbic acid was added to the dough. The results obtained were similar to those presented in example 10, except that the control dough containing no added ascorbic acid was found to be less extensible and having a much lower specific volume than the same dough containing added ascorbic acid.

### Example 12

Example 10 was repeated with the exception that additionally 0.06 part per weight amylase (Fermizyme^{™} ex DSM) was added to the dough. The breads containing the combination of Peptidase R^{™} and amylase were found to stale at a substantially slower rate than identical breads containing only added Peptidase R^{™} or only added amylase. In addition, the specific volume of the breads obtained with the combination of Peptidase R^{™} and amylase was found to be significantly higher than that of the breads obtained with no added enzyme or only Peptidase R^{™} or only amylase.

### Example 13

Example 1 was repeated except that this time aminopeptidase was incorporated into the dough in the form of Flavourzyme 500MG^{™} (Activity 500 LAP units/g). Furthermore, the ascorbic acid concentration was reduced to 0.15 parts per weight. The dosages of Flavourzyme 500MG^{™} employed were 0.075, 0.15 and 0.3 parts per weight.

It was found that the doughs prepared with Flavourzyme 500MG^{™} were softer and more extensible than the dough that did not contain added aminopeptidase (control). The baked breads containing added aminopeptidase were found to have a softer crumb than the control. Furthermore, it was found that the breads containing Flavourzyme 500MG^{™} were staling at a slower rate than the control product.

The baked breads containing 0.15 or 0.3 parts per weight Flavourzyme 500MG^{™} were found to have a significantly higher specific volume than the control. To be more precise the specific volumes of the breads containing 0.15 and 0.3 parts per weight of aminopeptidase were respectively 6% and 11 % higher than the control.

### Example 14

Example 13 was repeated with the exception that no ascorbic acid was added to the dough. The results obtained were similar to those presented in example 13, except that the doughs containing no added ascorbic acid were found to be less extensible than the corresponding doughs described in example 12.

From the above experiments it was concluded that best overall results in terms of crumb softness (freshly baked and 4 days storage), dough extensibility and specific volume are obtained with the enzymes Peptidase R^{™}, Promod 446P^{™} and Peptidase 433P^{™}.

## Claims

1. Use of an aminopeptidase to increase and preserve crumb softness of a baked dough product, said use comprising incorporating an aminopeptidase into the dough prior to baking.

2. Use according to claim 1, wherein the aminopeptidase is incorporated into the dough in an amount corresponding to an activity of at least 5 LAP units per kg of flour wherein one LAP unit is the amount of enzyme that hydrolyses leucine-p-nitroanilide to produce 1 µmole of p-nitroanilin per minute at a pH of 7.5 and a temperature of 30°C .

3. Use according to claim 1 or 2, wherein the aminopeptidase is a leucine aminopeptidase.

4. Use according to claim 3, wherein the aminopeptidase exhibits a leucine aminopeptidase activity of at least 5 LAP units per g wherein one LAP unit is the amount of enzyme that hydrolyses leucine-p-nitroanilide to produce 1 µmole of p-nitroanilin per minute at a pH of 7.5 and a temperature of 30°C.

5. Use according to any one of the preceding claims, wherein the aminopeptidase is derived from a non-genetically modified *Aspergillus oryzae* or *Rhizopus oryzae* strain or from a transformed host organism carrying a DNA sequence which codes for the aminopeptidase, said DNA sequence being derived from any one of the aforementioned *Aspergillus* or *Rhizopus* strains.

6. Use according to any one of the preceding claims, wherein the aminopeptidase is derived from a non-genetically modified *Rhizopus oryzae* strain.

7. A bread improver composition containing at least 100 mg/kg of an aminopeptidase derived from a non-genetically modified *Rhizopus oryzae* strain or from a transformed host organism carrying a DNA sequence which codes for an aminopeptidase, said DNA sequence being derived from a *Rhizopus oryzae* strain.

8. Bread improver composition according to claim 7, wherein the aminopeptidase is derived from a non-genetically modified *Rhizopus oryzae* strain.

9. Bread improver composition according to claim 7 or 8, wherein the aminopeptidase exhibits a leucine aminopeptidase activity of at least 5 LAP units per g wherein one LAP unit is the amount of enzyme that hydrolyses leucine-p-nitroanilide to produce 1 µmole of p-nitroanilin per minute at a pH of 7.5 and a temperature of 30°C.

10. Bread improver according to any one of claims 7-9, wherein said composition additionally containing at least 100 mg/kg ascorbic acid.

11. Bread improver composition according to any one of claims 7-10, wherein the composition additionally contains at least 0.1 wt.% of a bakery ingredient selected from the group consisting of emulsifiers, yeast, baking powder, flour, fat, redox agents, acids and enzyme preparations containing α-amylase or hemicellulase activity.

12. A dough containing at least 5 mg per kg of flour of an aminopeptidase derived from a non-genetically modified *Rhizopus oryzae* strain or from a transformed host organism carrying a DNA sequence which codes for an aminopeptidase, said DNA sequence being derived from a *Rhizopus oryzae* strain.

13. Dough according to claim 12, wherein the aminopeptidase is derived from a non-genetically modified *Rhizopus oryzae* strain.

14. Dough according to claim 12 or 13, wherein the aminopeptidase exhibits a leucine aminopeptidase activity of at least 5 LAP units per g wherein one LAP unit is the amount of enzyme that hydrolyses leucine-p-nitroanilide to produce 1 µmole of p-nitroanilin per minute at a pH of 7.5 and a temperature of 30°C.

15. Baked product obtainable by baking a dough according to any one of claims 12-14.

## Patentansprüche

1. Verwendung von Aminopeptidase zur Erhöhung und Erhaltung der Krumenweichheit eines gebackenen Teigprodukts, wobei die Verwendung den Einschluss von Aminopeptidase in den Teig vor dem Backen umfasst.

2. Verwendung nach Anspruch 1, wobei die Aminopeptidase in den Teig in einer Menge eingeschlossen wird, die einer Aktivität von mindestens 5 LAP-Einheiten pro Kilogramm Mehl entspricht, wobei eine LAP-Einheit die Menge von Enzym ist, die Leucin-p-nitroanilid hydrolysiert und bei einem pH-Wert von 7,5 und einer Temperatur von 30 °C 1 µmol p-Nitroanilin pro Minute produziert.

3. Verwendung nach Anspruch 1 oder 2, wobei die Aminopeptidase eine Leucin-Aminopeptidase ist.

4. Verwendung nach Anspruch 3, wobei die Aminopeptidase eine Leucin-Aminopeptidase-Aktivität von mindestens 5 LAP-Einheiten pro Gramm zeigt, wobei eine LAP-Einheit die Menge von Enzym ist, die Leucin-p-nitroanilid hydrolysiert und bei einem pH-Wert von 7,5 und einer Temperatur von 30 °C 1 µmol p-Nitroanilin pro Minute produziert.

5. Verwendung nach einem der vorhergehenden Ansprüche, wobei die Aminopeptidase von einem nicht genetisch veränderten Stamm *Aspergillus oryzae* oder *Rhizopus oryzae* oder von einem transformierten Wirtsorganismus, der eine DNA-Sequenz trägt, die für die Aminopeptidase kodiert, abgeleitet ist, wobei die DNA-Sequenz von einem der genannten *Aspergillus*- oder *Rhizopus*-Stämme abgeleitet ist.

6. Verwendung nach einem der vorhergehenden Ansprüche, wobei die Aminopeptidase von einem nicht genetisch veränderten *Rhizopus oryzae*-Stamm abgeleitet ist.

7. Brothilfsmittelzusammensetzung, die mindestens 100 mg/kg Aminopeptidase enthält, die von einem nicht genetisch verändertem *Rhizopus oryzae*-Stamm oder von einem transformierten Wirtsorganismus abgeleitet ist, der eine DNA-Sequenz trägt, die für Aminopeptidase kodiert, wobei die DNA-Sequenz von einem *Rhizopus oryzae*-Stamm abgeleitet ist.

8. Brothilfsmittelzusammensetzung nach Anspruch 7, wobei die Aminopeptidase von einem nicht genetisch veränderten *Rhizopus oryzae*-Stamm abgeleitet ist.

9. Brothilfsmittelzusammensetzung nach Anspruch 7 oder 8, wobei die Aminopeptidase eine Leucin-Aminopeptidase-Aktivität von mindestens 5 LAP-Einheiten pro Gramm zeigt, wobei eine LAP-Einheit die Menge von Enzym ist, die Leucin-p-nitroanilid hydrolysiert und bei einem pH-Wert von 7,5 und einer Temperatur von 30 °C 1 µmol p-Nitroanilin pro Minute produziert.

10. Brothilfsmittel nach einem der Ansprüche 7 bis 9, wobei die Zusammensetzung zusätzlich mindestens 100 mg/kg Ascorbinsäure enthält.

11. Brothilfsmittelzusammensetzung nach einem der Ansprüche 7 bis 10, wobei die Zusammensetzung zusätzlich mindestens 0,1 Gew.-% Backzutat ausgewählt aus der Gruppe bestehend aus Emulgiermitteln, Hefe, Backpulver, Mehl, Fett, Redoxmitteln, Säuren und Enzymzubereitungen mit α-Amylase- oder Hemicellulase-Aktivität enthält.

12. Teig, der mindestens 5 mg/kg Aminopeptidase, die von einem nicht genetisch modifizierten *Rhizopus oryzae*-Stamm oder von einem transformierten Wirtsorganismus abgeleitet ist, der eine DNA-Sequenz trägt, die für Aminopeptidase kodiert, wobei die DNA-Sequenz von einem *Rhizopus oryzae*-Stamm abgeleitet ist, pro Kilogramm Mehl enthält.

13. Teig nach Anspruch 12, wobei die Aminopeptidase von einem nicht genetisch veränderten *Rhizopus oryzae*-Stamm abgeleitet ist.

14. Teig nach Anspruch 12 oder 13, wobei die Aminopeptidase eine Leucin-Aminopeptidase-Aktivität von mindestens 5 LAP-Einheiten pro Gramm zeigt, wobei eine LAP-Einheit die Menge von Enzym ist, die Leucin-p-nitroanilid hydrolysiert und bei einem pH-Wert von 7,5 und einer Temperatur von 30 °C 1 µmol p-Nitroanilin pro Minute produziert.

15. Backware, die durch Backen eines Teigs gemäß einem der Ansprüche 12 bis 14 erhältlich ist.

## Revendications

1. Utilisation d'une aminopeptidase pour augmenter et préserver la douceur de la mie d'un produit de pâte cuit, ladite utilisation comprenant l'incorporation d'une aminopeptidase dans la pâte avant la cuisson.

2. Utilisation selon la revendication 1, dans laquelle l'aminopeptidase est incorporée dans la pâte en une quantité correspondant à une activité d'au moins 5 unités de LAP par kg de farine, où une unité de LAP est la quantité d'enzyme qui hydrolyse la leucine-p-nitroanilide pour produire 1 µmole de p-nitroaniline par minute à un pH de 7,5 et une température de 30°C.

3. Utilisation selon la revendication 1 ou 2, dans laquelle l'aminopeptidase est une leucine aminopeptidase.

4. Utilisation selon la revendication 3, dans laquelle l'aminopeptidase présente une activité de leucine aminopeptidase d'au moins 5 unités de LAP par g, où une unité de LAP est la quantité d'enzyme qui hydrolyse la leucine-p-nitroanilide pour produire 1 µmole de p-nitroaniline par minute à un pH de 7,5 et une température de 30°C.

5. Utilisation selon l'une quelconque des revendications précédentes, dans laquelle l'aminopeptidase est dérivée d'une lignée *Aspergillus oryzae* ou *Rhizopus oryzae* qui n'est pas modifiée génétiquement ou d'un organisme hôte transformé portant une séquence d'ADN qui code l'aminopeptidase, ladite séquence d'ADN étant dérivée de l'une quelconque des lignées *Aspergillus* ou *Rhizopus* précitées.

6. Utilisation selon l'une quelconque des revendications précédentes, dans laquelle l'aminopeptidase est dérivée d'une lignée *Rhizopus oryzae* qui n'est pas modifiée génétiquement.

7. Composition améliorant le pain contenant au moins 100 mg/kg d'une aminopeptidase dérivée d'une lignée *Rhizopus oryzae* qui n'est pas modifiée génétiquement ou d'un organisme hôte transformé portant une séquence d'ADN qui code une aminopeptidase, ladite séquence d'ADN étant dérivée d'une lignée *Rhizopus oryzae.*

8. Composition améliorant le pain selon la revendication 7, dans laquelle l'aminopeptidase est dérivée d'une lignée *Rhizopus oryzae* qui n'est pas modifiée génétiquement.

9. Composition améliorant le pain selon la revendication 7 ou 8, dans laquelle l'aminopeptidase présente une activité de leucine aminopeptidase d'au moins 5 unités de LAP par g, où une unité de LAP est la quantité d'enzyme qui hydrolyse la leucine-p-nitroanilide pour produire 1 µmole de p-nitroaniline par minute à un pH de 7,5 et une température de 30°C.

10. Composition améliorant le pain selon l'une quelconque des revendications 7 à 9, dans laquelle ladite composition contient en outre au moins 100 mg/kg d'acide ascorbique.

11. Composition améliorant le pain selon l'une quelconque des revendications 7 à 10, dans laquelle la composition contient en outre au moins 0,1% en poids d'un ingrédient de panification choisi parmi le groupe composé d'émulsifiants, de levure, de levure chimique, de farine, de graisse, d'agents oxy-réducteurs, d'acides et de préparations à base d'enzyme contenant une activité α-amylase ou hémicellulase.

12. Pâte contenant au moins 5 mg par kg de farine d'une aminopeptidase dérivée d'une lignée *Rhizopus oryzae* qui n'est pas modifiée génétiquement ou d'un organisme hôte transformé portant une séquence d'ADN qui code une aminopeptidase, ladite séquence d'ADN étant dérivée d'une lignée *Rhizopus oryzae.*

13. Pâte selon la revendication 12, dans laquelle l'aminopeptidase est dérivée d'une lignée *Rhizopus oryzae* qui n'est pas modifiée génétiquement.

14. Pâte selon la revendication 12 ou , dans laquelle l' aminopeptidase présente une activité de leucine aminopeptidase d'au moins 5 unités de LAP par g, où une unité de LAP est la quantité d'enzyme qui hydrolyse la leucine-p-nitroanilide pour produire 1 µmole de p-nitroaniline par minute à un pH de 7,5 et une température de 30°C.

15. Produit cuit pouvant être obtenu en cuisant une pâte selon l'une quelconque des revendications 12 à 14.
